# EUROPEAN PATENT SPECIFICATION

(11) **EP 1 600 892 B1**
(45) Date of publication and mention of the grant of the patent: **27.03.2013**
(21) Application number: 05011360.4
(22) Date of filing: 25.05.2005
(51) Int. Cl.: G06T 7/00

(54) **Method, apparatus, and program for detecting abnormal patterns**
Verfahren, Vorrichtung und Programm zur Detektion von abnormalen Mustern
Procédé, dispositif et programme pour la détection de formes anormales

(30) Priority: 27.05.2004 JP 2004156970
(43) Date of publication of application: 30.11.2005
(73) Proprietor: FUJIFILM Corporation, Minato-ku Tokyo (JP)
(72) Inventor: Nakamura, Keigo c/o Fuji Photo Film Co., Ltd., Ashigarakami-gun Kanagawa-ken (JP)
(74) Representative: Klunker . Schmitt-Nilson . Hirsch

(56) References cited:
- US-A- 5 740 268
- US-A- 5 790 690
- US-A- 5 799 100
- US-A1- 2001 043 729
- HIRAKO K ET AL: "DEVELOPMENT OF DETECTION FILTER FOR MICROCALCIFICATIONS ON MAMMOGRAMS: A METHOD BASED ON DENSITY GRADIENT AND TRIPLE-RING FILTER ANALYSIS" SYSTEMS & COMPUTERS IN JAPAN, SCRIPTA TECHNICA JOURNALS. NEW YORK, US, vol. 27, no. 13, 30 November 1996 (1996-11-30), pages 36-48, XP000685976 ISSN: 0882-1666
- HAND W ET AL: "Computer screening of xeromammograms: A technique for defining suspicious areas of the breast", COMPUTERS AND BIOMEDICAL RESEARCH, ACADEMIC PRESS, LONDON, GB, vol. 12, no. 5, 1 October 1979 (1979-10-01), pages 445-460, XP022956375, ISSN: 0010-4809, DOI: DOI:10.1016/0010-4809(79)90031-4 [retrieved on 1979-10-01]
- LAU T-K ET AL: "Automated detection of breast tumors using the asymmetry approach", COMPUTERS AND BIOMEDICAL RESEARCH, ACADEMIC PRESS, LONDON, GB, vol. 24, no. 3, 1 June 1991 (1991-06-01), pages 273-295, XP022956571, ISSN: 0010-4809, DOI: DOI:10.1016/0010-4809(91)90049-3 [retrieved on 1991-06-01]
- YOSHIDA H ET AL: "COMPUTERIZED DETECTION OF PULMONARY NODULES IN CHEST RADIOGRAPHS: REDUCTION OF FALSE POSITIVES BASED ON SYMMETRY BETWEEN LEFT AND RIGHT LUNGS", OE REPORTS, XX, XX, vol. 3979, no. PART 01/02, 14 February 2000 (2000-02-14), pages 97-102, XP001003040,
- YOSHIDA H: "Local Contralateral Subtraction Based on Bilateral Symmetry of Lung for Reduction of False Positives in Computerized Detection of Pulmonary Nodules", IEEE TRANSACTIONS ON BIOMEDICAL ENGINEERING, IEEE SERVICE CENTER, PISCATAWAY, NJ, USA, vol. 51, no. 5, 1 May 2004 (2004-05-01), pages 778-789, XP011111444, ISSN: 0018-9294, DOI: 10.1109/TBME.2004.824136

## Description

### BACKGROUND OF THE INVENTION

### Field of the Invention

The present invention relates to a method, an apparatus, and a program for detecting abnormal patterns. Particularly, the present invention relates to a method and an apparatus for detecting abnormal patterns from within medical images, based on medical image data sets that represent the medical images according to the preamble of claim 1 and claim 4, respectively.

### Description of the Related Art

There are known systems that detect abnormal patterns, such as tumor patterns and calcification patterns, from within medical images, based on medical image data sets that represent the medical images (refer to Japanese Unexamined Patent Publication Nos. 8(1996)-294479 and 8(1996)-287230, for example).

Various techniques have been proposed for detecting abnormal patterns and for improving the detection accuracies of these systems. As an example of such a technique, there is that disclosed in "Detection of Lung Nodules on Digital Chest Radiographs", by Jun Wei, Yoshihiro Hagihara, and Hidefumi Kobatake, Medical Imaging Technology, Vol. 19, No. 6, November 2001. This technique extracts abnormal pattern candidates from within medical images, then compares the candidates against similar tissue within the same medical image, to reduce False Positive (FP) detection results. This technique is related to systems for detecting tumor patterns, employing digital chest X-ray images, and takes the fact that normal tissue of the right and left lungs are similar to a degree into consideration. A vertical line that passes through the center of gravity of a region that includes both lungs is designated as an axis of linear symmetry. A point, which is symmetrical with the abnormal pattern candidate, is set, and a correlative value between the patterns of the candidate and the point is calculated as a first characteristic amount. Then, a judging process is performed, based on the first characteristic amount, to judge whether the candidate is an abnormal pattern.

However, the shapes of the lungs and ribs within simple chest X-rays, obtained by irradiating X-rays onto the thorax from the front and by detecting the transmitted X-rays, vary greatly depending on the posture of the subject (rotation, inclination and the like) during photography, or due to asymmetry between the left and right tissue systems within subjects. Therefore, the aforementioned conventional technique that compares tissue, which are in a linearly symmetrical positional relationship has a problem with regard to the accuracy in specifying the position of comparative tissue.

The conference paper "Computerized detection of pulmonary nodules in chest radiographs: reduction of false positives based on symmetry between left and right lungs", Yoshida et al., proceedings of SPIE, vol.3979, 2000, discloses a method for reducing false positive in lung nodule detection. Suspicious regions are determined in one of the lungs of a subject and tested by finding corresponding contralateral regions in the other lung. The position of the spine is found and used to determine the positions of the suspicious and contralateral regions. It is then judged whether the suspicious regions contain nodules based on a comparison between corresponding regions.

US-A-5 790 690 discloses an abnormal pattern detecting method and apparatus, respectively. Specifically, this prior art is related to the detection of disease in an image of a human chest. A vertical profile of the lung is obtained and a candidate horizontal profile is selected on maxima of the vertical profile. The candidate regions are extracted by judging whether or not pixels of a candidate region are above a certain threshold value. Candidate regions are compared with typical horizontal lung profiles.

US-A-5 740 268 discloses means for analysing images obtained by mammography. Digital image data are processed in order to locate potential abnormal regions and an edge gradient is determined for each such location. The gradient is compared with one or more thresholds. Based on the result of comparison, certain potential locations are eliminated from further analysis.

US 2001/0043729 discloses an abnormal pattern detecting method and apparatus, wherein candidate regions including potential abnormal patterns are obtained by carrying out a segmentation step of medical (mammographic) images. Comparative region images are obtained from a data base containing previously stored image data. Features of known cases are compared with the actual case (image). Due to the comparison of known cases with the actual unknown case, a likelihood of malignancy is calculated.

### SUMMARY OF THE INVENTION

The present invention has been developed in view of the foregoing circumstances. It is an object of the present invention to provide a method, an apparatus, and a program for detecting abnormal patterns, by which positions of comparative tissue to be compared against abnormal pattern candidates can be set more accurately, thereby improving judgment accuracy of abnormal pattern candidates.

The first abnormal pattern detecting method of the present invention comprises the steps of claim 1.

The abnormal pattern detecting apparatus of the present invention comprises the features of claim 4.

Here, the "medical images" may be simple radiation images, CT (computed tomography) images, MRI (magnetic resonance imaging) images and the like, for example.

In addition, "search" does not include obtaining positions which are linearly symmetrical with respect to the abnormal pattern candidates.

Further, "judging" refers to a judging process to narrow down abnormal pattern candidates, which have been preliminarily extracted. The judging step is not limited to final determination regarding whether a candidate is an abnormal pattern. Candidates which have been judged to be abnormal patterns in the judging step may undergo further judgment by other techniques, to determine whether they are abnormal patterns.

The "positions having positional relationships and anatomical characteristics similar to those of the candidate regions" refers to positions which are expected to have tissue structures similar to those of the candidate regions, due to anatomical symmetry. For example, a predetermined position above the fourth right rib or a predetermined position above the third right rib may be considered to correspond to a predetermined position above the fourth left rib. Other positions that correspond in the horizontal or vertical directions may be considered to be positions having positional relationships and anatomical characteristics similar to those of the candidate regions.

In the present invention, the method employed in the "extracting candidate regions" step and by the "candidate region extracting means" may be that which is disclosed in Japanese Unexamined Patent Publication No. 2002-109510. This method is an iris filter process, in which density gradients (or brightness gradients) are expressed as density gradient vectors, then portions of images having high degrees of concentration of the density gradient vectors are extracted as candidates. Alternatively, a morphology filter process, in which a plurality of structural elements corresponding to the size of abnormal patterns to be detected are employed, and portions of images at which densities vary within spatial ranges narrower than the structural elements are extracted as candidates, may be employed. As a further alternative, a method, in which abnormal pattern candidates are detected, then narrowed employing characteristic amounts, such as the circularity of the outlines of the candidate regions and the density dispersion within the candidate regions, may be employed to extract abnormal pattern candidates.

The "subjects" are human thoraxes, and the "anatomical data" may include at least position data regarding bones.

The "comparative medical images" may be images of the same subjects as those in the "medical images", and may be at least one of: temporal series images, which have been obtained in the past; subtraction images that represent the difference between two images; and energy subtraction images, in which either soft tissue or bone tissue has been emphasized. Alternatively, the comparative medical images may be images of subjects, which are similar to the subjects of the "medical images" in at least one of: anatomical data (shapes of lungs, ribs, and the like); age; gender; physique; smoking history; and clinical history.

In the present invention, the method employed in the "obtaining comparative medical images" step and by the "comparative medical image obtaining means" may be manual selection and input of comparative medical image data sets. Alternatively, the comparative medical images may be searched for from within a database that stores therein a great number of image data sets. In the case that the comparative medical images are searched for, "medical image data sets" and the image data sets stored in the image database may have data that specifies subjects and/or data that represents the subjects' ages, genders, physiques, and other anatomical characteristics attached thereto. The searching may be performed based on the attached data.

In the present invention, the "extracting candidate regions" step and the "candidate region extracting means" may extract a plurality of candidate regions. In addition, the "setting comparative region images" step and the "comparative region image setting means" may set a plurality of different comparative region images with respect to a single candidate region.

According to the method, apparatus, and program for detecting abnormal patterns of the present invention, candidate regions that include abnormal candidates are extracted from within medical images, based on medical image data sets. Then, comparative region images, against which the images within the candidate regions are compared, are set. Characteristic amounts that represent correlations among the images within the candidate regions and the comparative region images are calculated. Whether the candidates within the candidate regions are abnormal patterns is judged, employing at least the characteristic amounts. In the present invention, the setting of the comparative region images is performed by actually searching for images similar to the images within the candidate regions, then by setting the similar images as the comparative region images. Therefore, comparative region images, which can be expected to represent healthy tissue similar to the tissue pictured in the images of the candidate regions and therefore suitable for comparison against the images of the candidate regions, are enabled to be set more accurately. Accordingly, the judgment accuracy regarding abnormal patterns can be improved.

The positions of comparative region images set by conventional methods were limited to those which were geometrically symmetrical with respect to candidate regions in the horizontal direction. Thus, there had been a problem that data within images, which is effective in judging abnormal pattern candidates, were not sufficiently utilized. However, according to the method, apparatus, and program for detecting abnormal patterns of the present invention, the positions of comparative region images are not limited to those in the horizontal direction. Therefore, portions of images, which are expected to represent healthy tissue similar to the tissue pictured in the candidate regions and which are not separated from the candidate regions in the horizontal direction, may be set as the comparative region images. Accordingly, further utilization of data, which is effective in judging abnormal pattern candidates, becomes possible.

### BRIEF DESCRIPTION OF THE DRAWINGS

Figure 1 is a block diagram that illustrates the construction of an abnormal pattern detecting apparatus, according to a first embodiment of the present invention.
Figure 2 is a flow chart that illustrates the processes performed by the abnormal pattern detecting apparatus according to the first embodiment of the present invention.
Figure 3 is a diagram that illustrates an image of a candidate region and the vicinity thereof.
Figures 4A, 4B, and 4C are schematic diagrams that illustrate examples of positional relationships among candidate region images and comparative region images.
Figure 5 is a block diagram illustrating the construction of an abnormal pattern detecting apparatus, according to a second embodiment of the present invention.
Figure 6 is a flow chart that illustrates the processes performed by the abnormal pattern detecting apparatus according to the second embodiment of the present invention.

### DESCRIPTION OF THE PREFERRED EMBODIMENTS

Hereinafter, embodiments of the abnormal pattern detecting apparatus according to the present invention will be described.

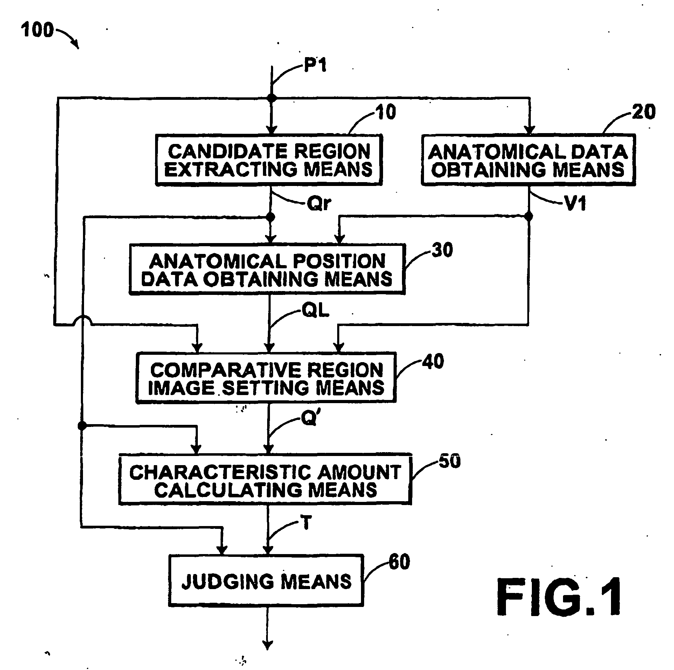

Figure 1 is a block diagram that illustrates the construction of an abnormal pattern detecting apparatus 100, according to a first embodiment of the present invention which is an embodiment of the first abnormal pattern detecting apparatus of the present invention. The abnormal pattern detecting apparatus 100 of Figure 1 comprises: candidate region extracting means 10; anatomical data obtaining means 20; anatomical position data obtaining means 30; comparative region image setting means 40; characteristic amount calculating means 50; and judging means 60. The candidate region extracting means 10 extracts candidate regions Qr that include tumor pattern candidates g from a chest X-ray image P1, represented by a chest X-ray image data set P1 (hereinafter, image data sets and the images that they represent will be denoted by the same reference numerals, for the sake of convenience) which is input thereto. The anatomical data obtaining means 20 obtains anatomical data V1 regarding the chest 1 within the chest X-ray image P1, based on the chest X-ray image data set P1. The anatomical position data obtaining means 30 obtains anatomical position data Ql regarding the candidate regions Qr, based on the anatomical data V1 regarding the chest 1. The comparative region image setting means 40 searches for images, which are similar to images Q within the candidate regions Qr (hereinafter, simply referred to as "candidate region images Q") in the vicinities of positions having positional relationships and anatomical characteristics similar to those of the candidate regions Qr, based on the anatomical data V1 regarding the chest 1 and the anatomical position data Q1 regarding the candidate regions Qr. Then, the similar images are set as comparative region images Q', which are to be compared against the candidate region images Q. The characteristic amount calculating means 50 calculates characteristic amounts T that represent correlations among the candidate region images Q and the comparative region images Q', based on the image data sets that represent the candidate region images Q and the comparative region images Q'. The judging means 60 judges whether the candidates g within the candidate regions Qr are tumor patterns, employing at least the characteristic amounts T.

Next, the operation of the abnormal pattern detecting apparatus 100 will be described.

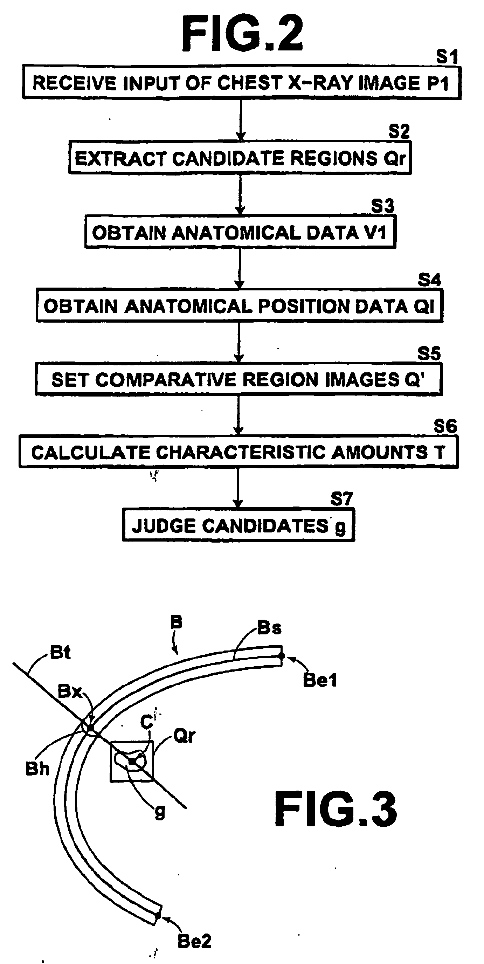

Figure 2 is a flow chart that illustrates the processes performed by the abnormal pattern detecting apparatus 100.

First, the abnormal pattern detecting apparatus 100 receives input of a chest X-ray image data set P1 that represents a chest X-ray image P1 of a patient (step S1).

After the chest X-ray image data set P1 is input, the candidate region extracting means extracts candidate regions Qr that include tumor pattern candidates from the chest X-ray image P1, employing an iris filter process such as that disclosed in Japanese Unexamined Patent Publication No. 2002-109510 (step S2).

Meanwhile, the anatomical data obtaining means 20 obtains anatomical data V1, based on the input chest X-ray image data set (step S3). Here, "anatomical data" refers to data relating to structural elements of the subj ect pictured wi thin the medical image. Specifically, the anatomical data may be positions of the lungs, the hila of the lungs, the ribs, the heart, and the diaphragm, in the case of a chest X-ray image, for example. Note that it is not necessary for the anatomical data obtaining means 20 to discriminate all of the structural elements of the subject pictured in medical images. It is sufficient to obtain only data, which is necessary to obtain the anatomical positions of the extracted abnormal pattern candidate regions. Here, the lungs and the ribs are discriminated, and the positions of the left and right lungs, the collarbones, and each rib within the chest X-ray image P1 are obtained as the anatomical data V1.

Discrimination of the lungs may be performed employing the method disclosed in Japanese Patent No. 3433928, for example. In this method, a chest X-ray image is smoothed. Then, positions at which density values exceed a predetermined threshold value, or at which changes in a first derivative function are greatest, are searched for, to detect lung outlines. Alternatively, the method disclosed in Japanese Patent No. 2987633 may be employed. In this method, density value histograms are generated regarding chest X-ray images. Then, portions of the histogram within a predetermined density range, determined by the shape of the curve or the area within the histogram, are detected as lungs. As a further alternative, the method disclosed in Japanese Unexamined Patent Publication No. 2003-006661 may be applied to lung discrimination. In this method, a template having a shape which is substantially similar to the outline of an average heart is employed to perform a template matching process to detect a rough outline of the heart. Then, partial outlines are accurately detected, based on the detected rough outline, and the accurately detected partial outlines are designated as the outline.

Discrimination of ribs may be performed employing the method disclosed in "Discrimination of Ribs within Indirect Radiography Chest X-ray Images", The Electronic Communications Academy, Image Engineering Research Material No. IT72-24 (1972-10), October 26, 1972. In this method, a filter which is sensitive with regard to lines is employed to scan a chest X-ray image, and a linear figure is extracted. Lines that correspond to ribs are extracted from the linear figure, based on the positions of the lines on the X-ray image, the directions in which the lines extend, and the like. Then, rib patterns are extracted by approximating the boundary lines of the ribs by quadratic equation approximation. Alternatively, the method disclosed in Japanese Patent Application No. 2003-182093 may be employed. In this method, initial shapes of ribs are detected by edge detection (detection of shapes that approximate parabolas). The initial shapes are projected onto rib shape models (desired rib shapes are generated by totaling the linear shapes of average shapes, obtained from teaching data, and a plurality of main components, obtained by main component analysis of the teaching data), to obtain projected rib model shapes.

After the candidate regions Qr are extracted and the anatomical data V1 is obtained, the anatomical position data obtaining means 30 obtains anatomical position data Ql, which are relative positions of the candidate regions Qr with respect to discriminated lungs or bones, based on the anatomical data V1 (step S4). A specific example will be described below.

Figure 3 is a diagram that illustrates a candidate region Qr and a bone in the vicinity thereof. First, a bone B closest to the center point C of the candidate region Qr is searched for. Then, a line segment Bs that represents the central axis of the bone B and extends from a first end Be1 to a second end Be2 of the bone B is set. The point along the line segment Bs closest to the center point C is designated as Bx, and a line Bt that passes through the point Bx and the point C is set. Next, the position of the point Bx is determined as a distance along the line segment Bs from either the first end Be1 or the second end Be2 to the point Bx. The position of the point C is determined as a vector Br from the point Bx to the point C. The magnitude of the vector Br is determined as a size, standardized by a width Bh of the bone B in the direction of the line Bt. Data that specifies the position of the center point C, that is, the relative position of the point Bx with respect to the bone B and the vector Br, may be designated as the anatomical position data Q1 regarding the candidate region Qr.

After the anatomical position data Q1 is obtained, the comparative region image setting means 40 searches for images similar to the candidate region images Q, in the vicinities of positions having positional relationships and anatomical characteristics similar to those of the candidate regions Qr, within the chest X-ray image P1. The similar images are set as comparative region images Q', which are to be compared against the candidate region images Q (step S5). Specifically, a bone B' that corresponds to the bone B closest to the candidate region Qr in the horizontal direction, or another bone B', which is the same type of bone as the bone B, is searched for, based on the anatomical data V1. Then, a point Bx' is set at a position having a positional relationship with respect to the bone B' equivalent to the positional relationship between the point Bs and the bone B. Next, a vector Br', which is of the same or the opposite orientation as that of the vector Br (if the bones are not separated in the horizontal direction, the orientation is the same, and if the bones are separated in the horizontal direction, then the orientation is reversed) and which is of the same magnitude (standardized according to the width of the bone B') as that of the vector Br, is set. A point C' is set at a position removed from the point Bx' by the vector Br'. The point C' is designated as the position having positional relationships and anatomical characteristics similar to those of the candidate region Qr. Thereafter, images of the same size as that of the candidate region Qr are sequentially cut out from within the entirety of a predetermined range having the point C' as the center. Correlative values that represent similarities among the candidate region image Q and the cut out images are calculated. The cut out image having the highest correlative value is set as the comparative region image Q'. Average differences among pixel values of correspondent pixels within the candidate region image Q and the cut out images may be employed as the correlative value.

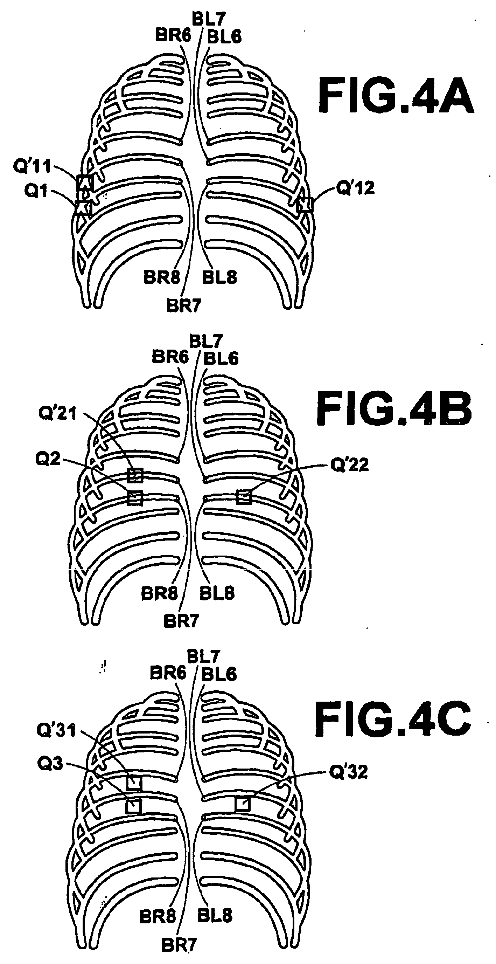

Figures 4A, 4B, and 4C are schematic diagrams that illustrate examples of positional relationships among candidate region images Q and comparative region images Q'. Figure 4A illustrates a case in which a candidate region image Q1 is located at the intersection between the 7^{th} rib BR7 and the 8^{th} rib BR8 on the left side of a chest X-ray image P1. In this case, a comparative region image Q'11 is set at the intersection between the 6^{th} rib BR6 and the 7^{th} rib BR7 on the left side of the chest X-ray image P1, or a comparative region image Q'12 is set at the intersection between the 7^{th} rib BL7 and the 8^{th} rib BL8 on the right side of the chest X-ray image P1. Figure 4B illustrates a case in which a candidate region image Q2 is located at a point on the 7^{th} rib BR7 on the left side of a chest X-ray image P1. In this case, a comparative region image Q'21 is set at a corresponding point on the 6^{th} rib BR6 on the left side of the chest X-ray image P1, or a comparative region image Q'22 is set at a corresponding point on the 7^{th} rib BL7 on the right side of the chest X-ray image P1. Figure 4C illustrates a case in which a candidate region image Q3 is located at a point between the seventh rib BR7 and the eighth rib BR8 on the left side of a chest X-ray image P1. In this case, a comparative region image Q' 31 is set at a corresponding point between the sixth rib BR6 and the seventh rib BR7 on the left side of the chest X-ray image P1, or a comparative region image Q' 32 is set at a corresponding point between the seventh rib BL7 and the eighth rib BL8 on the right side of the chest X-ray image P1.

Note that in the case that the subject is a human thorax, organs and tissue that correspond to each other in the horizontal direction appear as symmetrical structures in the horizontal direction. Therefore, in the case that a candidate region image Q and a cut out image are in a horizontally symmetric positional relationship with each other, one of the two are inverted before calculating the correlative value.

The range, in which the image similar to the candidate region image Q is searched for, may be determined according to the anatomical position of the candidate region image Q. For example, if a candidate region Qr is in the vicinity of the hilum of the lung, and tissue that corresponds to that within the candidate region Qr is located behind the heart, then the search may not be conducted in the horizontal direction. As another example, if a candidate region Qr is in the vicinity of a collarbone, then the search may be conducted only in the horizontal direction. By performing searches in this manner, erroneous setting of comparative region images Q' at locations at which tissue is not similar to that within candidate regions Qr can be prevented. In addition, because extraneous searching can be omitted, the efficiency of the search process can be improved.

After the comparative region images Q' are set, the characteristic amount calculating means 50 calculates characteristic amounts T that represent correlations among the candidate region image Q and the comparative region images Q' , based on the image data sets that represent the candidate region image Q and the comparative region images Q'. The characteristic amounts T may be average differences among pixel values of correspondent pixels within the images to be compared. Alternatively, the method disclosed in Japanese Unexamined Patent Publication No. 10-143634 may be employed to obtain correlations among "circularities" and "interior brightnesses" of the images to be compared. This method detects the "circularity" and "interior brightness" of images, utilizing a moving outline extraction method represented by the so-called "snakes" algorithm. As a further alternative, correlations may be calculated among output values of iris filters that represent density gradients of the images to be compared (step S6).

Note that in the case that a candidate region image Q and a comparative region image Q' are in a correspondent relationship in the horizontal direction, one of the two images are inverted in the horizontal direction before comparison, that is, calculation of the characteristic amount T is performed.

In addition, there are cases in which inclinations of tissue are shifted or tissues are distorted among candidate region images Q and comparative region images Q'. These phenomena are due to individual differences among subjects and differences in the postures of subjects during photography. Accordingly, non linear image processes, such as rotation or warping may be administered either the candidate region images Q or the comparative region images Q' to position tissues and organs, before calculating the characteristic amounts T.

The characteristic amount calculating means 50 calculates a plurality of other characteristic amounts that represent the likelihood that abnormal patterns are present within candidate regions Qr, in addition to the characteristic amounts T. Examples of such characteristic amounts are: dispersion values that represent density histograms of the interiors of the candidates; contract; angular moments; dispersion values that represent the characteristics of the peripheries of the candidates; bias; correlative values; moments; entropy; and circularities that represent the characteristics of the shapes of the candidates.

After the characteristic amounts are calculated, the judging means 60 employs the plurality of characteristic amounts, including the characteristic amounts T, to judge whether the candidates g within the candidate regions Qr are abnormal patterns. Mahalanobis distances of the plurality of calculated characteristic amounts may be employed to perform judgment, for example (step 57). A "Mahalanobis distance" is one of the measures of distance employed in pattern recognition within images, and it is possible to employ Mahalanobis distances to judge similarities among image patterns. Mahalanobis distances are defined as differences in vectors, which represent a plurality of characteristic amounts that represent characteristics of image patterns, between a standard image and an image which is a target of pattern recognition. Accordingly, whether an extracted candidate is an abnormal pattern can be judged, by observing similarities between the image patterns of the extracted candidate and a common abnormal pattern (malignant pattern).

Note that the judgment may also be performed based on a likelihood ratio of Mahalanobis distances. The "likelihood ratio of Mahalanobis distances" is represented by a ratio Dm1/Dm2. Dm1 is a Mahalanobis distance from a pattern class that represents a non malignant pattern, and Dm2 is a Mahalanobis distance from a pattern class that represents a malignant pattern. It can be judged that the probability that an image represents an abnormal pattern increases as the value of Dm1/Dm2 increases, and decreases as the value of Dm1/Dm2 decreases. Therefore, a predetermined value may be set as a threshold value, and judgment may be performed such that if the likelihood ratio is greater than or equal to the threshold value, a candidate is judged to be an abnormal pattern, and if the likelihood ratio is less than the threshold value, a candidate is judged to not be an abnormal pattern.

It is desirable that the comparisons among the candidate region images Q and the comparative region images Q' are not comparisons among images that all include abnormal patterns. Therefore, candidate regions are extracted from medical images, and comparative region images Q' are not set at regions which have been extracted as candidate regions.

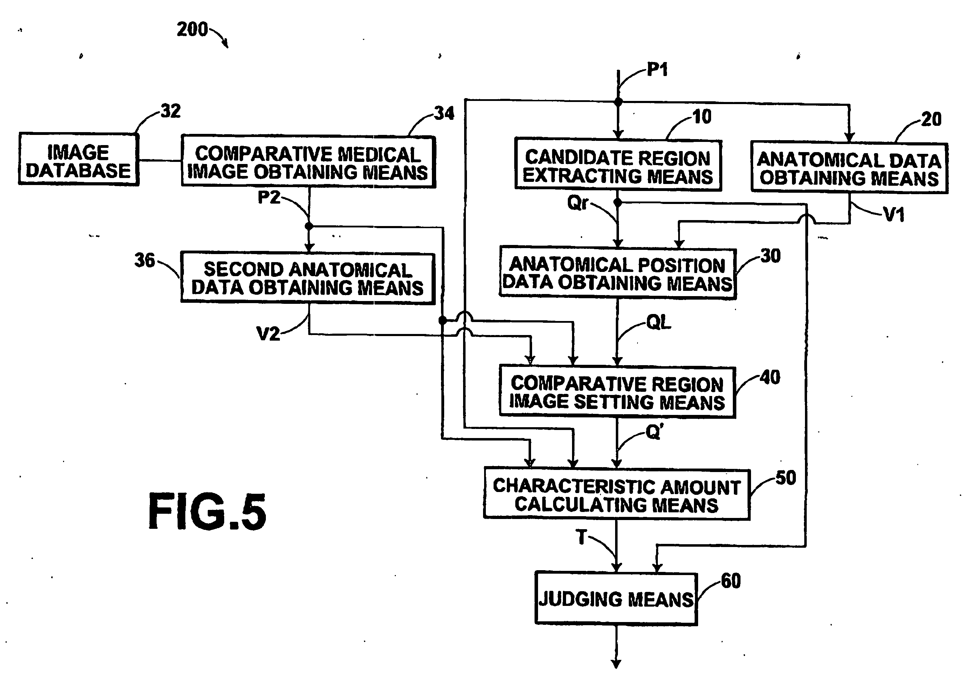

Figure 5 is a block diagram illustrating the construction of an abnormal pattern detecting apparatus 200, according to a second embodiment of the present invention which is an embodiment of the second abnormal pattern detecting apparatus of the present invention. The abnormal pattern detecting apparatus 200 of Figure 5 comprises: candidate region extracting means 10; anatomical data obtaining means 20; anatomical position data obtaining means 30; an image database 32; comparative medical image obtaining means 34; second anatomical data obtaining means 36; comparative region image obtaining means 40; characteristic amount calculating means 50; and judging means 60. The candidate region extracting means 10 extracts candidate regions Qr that include tumor pattern candidates g from a chest X-ray image P1, represented by a chest X-ray image data set P1 which is input thereto. The anatomical data obtaining means 20 obtains anatomical data V1 regarding the chest 1 within the chest X-ray image P1, based on the chest X-ray image data set P1. The anatomical position data obtaining means 30 obtains anatomical position data Q1 regarding the candidate regions Qr, based on the anatomical data V1 regarding the chest 1. The image database 32 stores a great number of different chest X-ray image data sets therein. The comparative medical image obtaining means 34 searches for and obtains chest X-ray image data sets P2, which are similar to the input chest X-ray image data set P1 in at least one manner, from the image database 32. The second anatomical data obtaining means 36 obtains anatomical data V2 regarding chests 2 pictured within the chest X-ray images P2, based on the chest X-ray image data sets P2. The comparative region image setting means 40 searches for images, which are similar to the candidate region images Q, in the vicinities of positions within the comparative chest X-ray images P2 having positional relationships and anatomical characteristics similar to those of the candidate regions Qr, based on the second anatomical data V2 and the anatomical position data Ql regarding the candidate regions Qr. Then, the similar images are set as comparative region images Q', which are to be compared against the candidate region images Q. The characteristic amount calculating means 50 calculates characteristic amounts T that represent correlations among the candidate region images Q and the comparative region images Q', based on the image data sets that represent the candidate region images Q and the comparative region images Q'. The judging means 60 judges whether the candidates g within the candidate regions Qr are tumor patterns, employing at least the characteristic amounts T.

In the case that patient ID's that enable specification of patients whose chests are imaged within the input chest X-ray image data set P1 and the chest X-ray image data sets P2 stored in the image database 32 are available, they are attached to the image data sets. In addition, additional data, such as the age; the gender; the weight; the smoking history; and the clinical history of the patients are attached, if they are available. Further, if lung discrimination and rib discrimination have already been performed, this data is also attached to the image data sets.

Next, the operation of the abnormal pattern detecting apparatus 200 will be described.

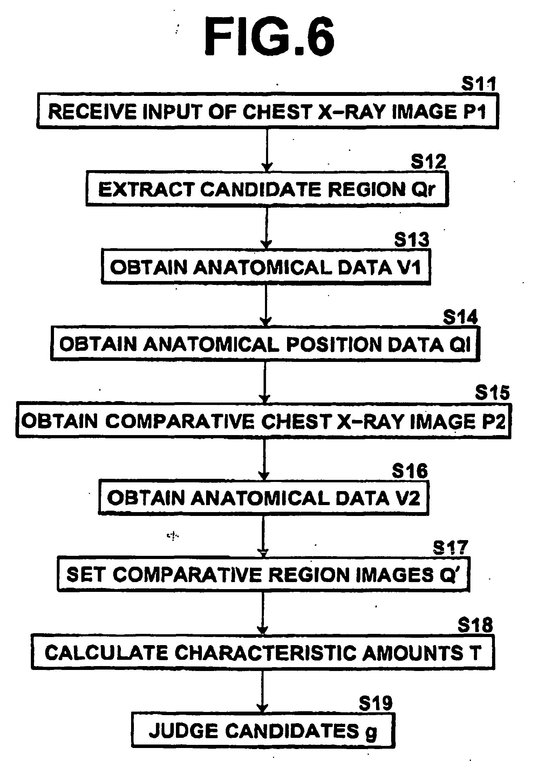

Figure 6 is a flow chart that illustrates the processes performed by the abnormal pattern detecting apparatus 200.

First, the abnormal pattern detecting apparatus 200 receives input of a chest X-ray image data set P1 (step S11).

After the chest X-ray image data set P1 is input, the candidate region extracting means extracts candidate regions Qr that include tumor pattern candidates from the chest X-ray image P1, employing an iris filter process or the like (step S12).

The anatomical data obtaining means 20 obtains anatomical data V1, based on the input chest X-ray image data set, in a manner similar to that of the first embodiment (step S13). Here, the lungs and the ribs are discriminated, and the positions of the left and right lungs, the collarbones, and each rib within the chest X-ray image P1 are obtained as the anatomical data V1.

After the candidate regions Qr are extracted and the anatomical data V1 is obtained, the anatomical position data obtaining means 30 obtains anatomical position data Ql regarding the candidate regions Qr, in a manner similar to that of the first embodiment (step S14).

Meanwhile, the comparative medical image obtaining means 34 searches for and obtains comparative chest X-ray image data sets P2, which exhibit similarities to the input chest X-ray image data set P1 and the chest 1 pictured therein, from within the image database 32, based on the data attached to the image data sets (step S15). For example, chest X-ray image data sets P2 that represent chest X-rays of the same subject as that of the chest X-ray image data set P1 may be obtained as the comparative chest X-ray image data sets P2. Alternatively, chest X-ray image data sets that are expected to exhibit similar anatomical characteristics as those of the subject of the chest X-ray image P1 may be obtained as the comparative chest X-ray image data sets P2. Examples of such image data sets are those that picture subjects who have high degrees of similarity regarding age, gender, height, weight, etc. with the subject of the chest X-ray image P1.

After the comparative chest X-ray image data sets P2 are obtained, the second anatomical data obtaining means 36 obtains anatomical data V2 regarding the chests 2 pictured within the comparative chest X-ray image data sets P2 in the same manner as in which the anatomical data V1 is obtained (step S16). Note that there may be cases in which the brightness levels of the comparative chest X-ray images P2 differ from that of the chest X-ray image P1. If there are differences in brightness levels, there is a possibility that adverse influences will be exerted onto correlative values between comparative images, which are calculated during the search for comparative region images Q' by the comparative region image setting means 40, and onto the characteristic amounts T, which are calculated by the characteristic amount calculating means 50. Therefore, it is preferable that the brightness levels, of images which are to be compared against each other, are corrected (by matching average pixel values, for example) in order to normalize the brightness levels.

After the second anatomical data V2 and the anatomical position data Ql are obtained, the comparative region image setting means 40 searches for images, which are similar to the candidate region images Q, in the vicinities of positions within the comparative chest X-ray images P2 having positional relationships and anatomical characteristics similar to those of the candidate regions Qr. Then, the similar images are set as comparative region images Q', which are to be compared against the candidate region images Q (step S17).

After the comparative region images Q' are set, the characteristic amount calculating means 50 calculates characteristic amounts T that represent correlations among the candidate region image Q and the comparative region images Q', based on the image data sets that represent the candidate region image Q and the comparative region images Q' (step S18). In addition, a plurality of other characteristic amounts that represent the likelihood that abnormal patterns are present within candidate regions Qr are also calculated.

After the characteristic amounts are calculated, the judging means 60 employs the plurality of characteristic amounts, including the characteristic amounts T, to judge whether the candidates g within the candidate regions Qr are abnormal patterns (step S19).

In this manner, the abnormal pattern detecting apparatuses according to the first and second embodiments extract candidate regions that include abnormal candidates from within medical images, based on medical image data sets. Then, comparative region images, against which the images within the candidate regions are compared, are set. Characteristic amounts that represent correlations among the images within the candidate regions and the comparative region images are calculated. Whether the candidates within the candidate regions are abnormal patterns is judged, employing at least the characteristic amounts. In the present invention, the setting of the comparative region images is performed by actually searching for images similar to the images within the candidate regions, then by setting the similar images as the comparative region images. Therefore, comparative region images, which can be expected to represent healthy tissue similar to the tissue pictured in the images of the candidate regions and therefore suitable for comparison against the images of the candidate regions, are enabled to be set more accurately. Accordingly, the judgment accuracy regarding abnormal patterns can be improved.

The positions of comparative region images set by conventional methods were limited to those which were geometrically symmetrical with respect to candidate regions in the horizontal direction. Thus, there had been a problem that data within images, which is effective in judging abnormal pattern candidates, were not sufficiently utilized. However, according to the method, apparatus, and program for detecting abnormal patterns of the present invention, the positions of comparative region images are not limited to those in the horizontal direction. Therefore, portions of images, which are expected to represent healthy tissue similar to the tissue pictured in the candidate regions and which are not separated from the candidate regions in the horizontal direction, may be set as the comparative region images. Accordingly, further utilization of data, which is effective in judging abnormal pattern candidates, becomes possible.

Note that in the first and second embodiments described above, the positions, around which the search for the comparative region images is performed, that is, the positions having positional relationships and anatomical characteristics similar to those of the candidate regions, are stringently determined as positions relative to the positions of bones. Alternatively, a more simplified method may be employed to determine the positions. The search may be conducted using positions in the vicinities of ordered ribs at specified regions of the lungs (the center, the lateral edges, etc.) as references.

In addition, the judgment regarding whether a candidate is an abnormal pattern is not limited to judgments that employ the plurality of characteristic amounts. Alternatively, only the characteristic amounts T may be employed. In this case, candidates g within candidate region images Q, for which the characteristic amounts T exceed a threshold value in a direction in which similarity decreases, may be judged as abnormal patterns.

## Claims

1. An abnormal pattern detecting method, comprising the steps of:
extracting (52) candidate regions (Qr) that include abnormal pattern candidates (g) from medical images (P1), represented by medical image data sets of a subject, which have been input;
setting (55) comparative region images (Q'), which are compared against the candidate regions;
calculating (56) characteristic amounts (T) that represent correlations among the comparative region images and the images within the candidate regions; and
judging (57) whether the candidates included in the candidate regions are abnormal patterns, based at least on the calculated characteristic amounts;
wherein:
the comparative region images (Q') being set in a manner such that images, which are similar to the images within the candidate regions of the medical images, are searched for;
the similar images being set as the comparative region images, obtaining (53) anatomical data (V1) regarding subjects within said medical images, based on said medical image data sets, the anatomical data (V1) representing positional data of an anatomical structure within a subject;
obtaining (54) anatomical position data that represents position data of the candidate regions relative to the anatomical structure, based on the anatomical data regarding the subjects; and
searching for the comparative region images in the vicinities of positions having positional relationships and anatomical characteristics similar to those of the candidate regions, that refer to positions which are expected to have tissue structures similar to those of the candidate regions, due to anatomical symmetry, based on the anatomical data and the anatomical position data of the subjects,
wherein:
the subjects are human thoraxes;
**characterized in that** :
the anatomical data includes at least position data regarding ribs within the medical images, and wherein the candidate region and the comparative region are not separated in the horizontal direction.

2. An abnormal pattern detecting method as defined in claim 1,
obtaining comparative medical image data sets, which are different from the medical image data sets but represent images of the same type of subject; and wherein:
the comparative region images are set in a manner such that images, which are similar to the images within the candidate regions of the medical images, are searched for among the comparative medical image data sets.

3. An abnormal pattern detecting method as defined in claim 2, wherein the comparative medical images are images of the same subject as those in the medical images.

4. An abnormal pattern detecting apparatus, comprising:
candidate region extracting means (10), for extracting candidate regions (Qr) that include abnormal pattern candidates from medical images, represented by medical image data sets (P1) of a subject, which have been input;
comparative region image setting means (40), for setting comparative region images (Q'), which are compared against the candidate regions (Qr);
characteristic amount calculating means (50), for calculating characteristic amounts (T) that represent correlations among the comparative region images and the images within the candidate regions; and
judging means (60), for judging whether the candidates included in the candidate regions are abnormal patterns, based at least on the calculated characteristic amounts (T); wherein:
the comparative region image setting means (50) setting the comparative region images (Q') in a manner such that images, which are similar to the images within the candidate regions of the medical images, are searched for;
setting the similar images as the comparative region images (Q'):
anatomical data obtaining means (20), for obtaining anatomical data (V1) regarding subjects within the medical images, based on said medical image data sets, the anatomical data (V1) representing positional data of an anatomical structure within a subject; and
anatomical position data obtaining means (30), for obtaining anatomical position data that represents position data of the candidate regions relative to the anatomical structure, based on the anatomical data regarding the subjects; wherein:
the comparative region image setting means (50) searches for the comparative region images in the vicinities of the positions having positional relationships and anatomical characteristics similar to those of the candidate regions (Qr), that refer to positions which are expected to have tissue structures similar to those of the candidate regions, due to anatomical symmetry, based on the anatomical data and the anatomical position data of the subjects,
wherein:
the subjects are human thoraxes;
**characterized in that**:
the anatomical data includes at least position data regarding ribs within the medical images, and wherein the candidate region and the comparative region are not separated in the horizontal direction.

5. An abnormal pattern detecting apparatus as defined in claim 4, wherein:
the comparative medical images are images of the same subjects as those in the medical images, and are at least one of: temporal series images, which have been obtained in the past; subtraction images that represent the difference between two images; and energy subtraction images, in which either soft tissue or bone tissue has been emphasized.

6. An abnormal pattern detecting apparatus as defined in claim 4 or 5, wherein:
the comparative region image setting means (40) sets a plurality of different comparative region images for a single candidate region.

7. A program that causes a computer to execute the abnormal pattern detecting method according to claim 1.

8. A computer readable medium having the program defined in claim 7 recorded therein.

## Patentansprüche

1. Nachweisverfahren zum Nachweisen eines abnormalen Musters, umfassend folgende Schritte:
Extrahieren (S2) von Kandidatenzonen (Qr), die abnormale Musterkandidaten aus medizinischen Bildern (P1) enthalten, repräsentiert durch eingegebene Medizinbild-Datenmengen eines Subjekts;
Einstellen (S5) von Vergleichszonenbildern (Q'), die mit den Kandidatenzonen verglichen werden;
Berechnen (S6) von charakteristischen Beträgen (T), die Korrelationen unter den Vergleichszonenbildern und den Bildern innerhalb der Kandidatenzonen repräsentieren; und
Beurteilen (S4), ob die in den Kandidatenzonen enthaltenen Kandidaten abnormale Muster sind, basierend auf zumindest den berechneten charakteristischen Beträgen;
wobei:
die Vergleichszonenbilder (Q') in der Weise eingestellt werden, dass Bilder, die Bildern innerhalb der Kandidatenzonen der medizinischen Bildern ähnlich sind, gesucht werden;
die ähnlichen Bildern als die Vergleichszonenbilder eingerichtet werden,
anatomische Daten (V1) bezüglich Subjekten innerhalb der medizinischen Bildern basierend auf den Medizinbild-Datenmengen gewonnen werden (S3), wobei die anatomischen Daten (V1) Positionsdaten einer anatomischer Struktur innerhalb eines Subjekts repräsentieren;
anatomische Positionsdaten, die Positionsdaten der Kandidatenzonen in Bezug auf die anatomische Struktur repräsentieren, basierend auf den anatomischen Daten der Subjekte gewonnen werden; und
Vergleichszonenbilder in der Nähe von Positionen gesucht werden, die eine Lagebeziehung und anatomische Charakteristika ähnlich wie die der Kandidatenzonen aufweisen, welche sich auf Positionen beziehen, von denen erwartet wird, dass sie Gewebestrukturen ähnlich jenen der Kandidatenzonen aufgrund anatomischer Symmetrie aufweisen, basierend auf den anatomischen Daten und den anatomischen Positionsdaten der Subjekte,
wobei
die Subjekte menschliche Thoraxe sind;
**dadurch gekennzeichnet, dass**:
die anatomischen Daten mindestens Positionsdaten bezüglich Rippen innerhalb der medizinischen Bildern enthalten, und wobei die Kandidatenzone und die Vergleichszone in horizontaler Richtung nicht getrennt sind.

2. Verfahren nach Anspruch 1, weiterhin umfassend den Schritt:
Gewinnen von Vergleichs-Medizinbild-Datenmengen, die sich von den Medizinbild-Datenmengen unterscheiden, jedoch Bilder des gleichen Subjekt-Typs repräsentieren, wobei
die Vergleichszonenbilder in der Weise eingerichtet werden, dass Bilder, die ähnlich den Bildern innerhalb der Kandidatenzonen der medizinischen Bildern sind, unter den Vergleichs-Medizinbild-Datenmengen gesucht werden.

3. Verfahren nach Anspruch 2, bei dem die Vergleichs-Medizinbilder Bilder des gleichen Subjekts wie dem in den medizinischen Bildern sind.

4. Nachweisvorrichtung zum Nachweisen eines abnormalen Musters, umfassend:
eine Kandidatenzonen-Extrahiereinrichtung (10) zum Extrahieren von Kandidatenzonen (Qr), die abnormale Musterkandidaten aus medizinischen Bildern enthalten, repräsentiert durch eingegebene Medizinbild-Datenmengen (P1) eines Subjekts;
eine Vergleichszonenbild-Einstelleinrichtung (40) zum Einstellen von Vergleichszonenbildern (Q'), die mit Kandidatenzonen (Qr) verglichen werden;
eine Charakteristischer-Betrag-Berechnungseinrichtung (50) zum Berechnen charakteristischer Beträge (T), die Korrelationen unter den Vergleichszonenbildern und den Bildern innerhalb der Kandidatenzonen repräsentieren; und
eine Beurteilungseinrichtung (60) zum Beurteilen, ob die in den Kandidatenzonen enthaltenen Kandidaten abnormale Muster sind, basierend auf zumindest den berechneten charakteristischen Beträgen (T), wobei
die Vergleichszonenbild-Einstelleinrichtung (50) die Vergleichszonenbilder (Q') in der Weise einstellt, dass die Bilder, die ähnlich sind den Bildern innerhalb der Kandidatenzonen der medizinischen Bilder, gesucht werden;
die ähnlichen Bilder als Vergleichszonenbilder (Q') eingerichtet werden;
eine Gewinnungseinrichtung für anatomische Daten (20) zum Gewinnen anatomischer Daten (V1) bezüglich Subjekten innerhalb der medizinischen Bilder, basierend auf den Medizinbild-Datenmengen, wobei die anatomischen Daten (V1) Positionsdaten einer anatomischen Struktur innerhalb des Subjekts repräsentieren; und
eine Gewinnungseinrichtung für anatomische Positionsdaten (30) zum Gewinnen anatomischer Positionsdaten, die Positionsdaten der Kandidatenzonen in Bezug auf die anatomische Struktur repräsentieren, basierend auf den anatomischen Daten der Subjekte; wobei
die Vergleichszonenbild-Einstelleinrichtung (50) die Vergleichszonenbilder in der jeweiligen Nähe derjenigen Positionen sucht, deren Lagebeziehung und anatomische Charakteristika ähnlich jenen der Kandidatenzonen (Qr) sind, welche sich auf Positionen beziehen, von denen erwartet wird, dass sie Gewebestrukturen ähnlich jenen der Kandidatenzonen aufgrund anatomischer Symmetrie aufweisen, basierend auf den anatomischen Daten und den anatomischen Positionsdaten der Subjekte,
wobei
die Subjekte menschliche Thoraxe sind,
**dadurch gekennzeichnet, dass**:
die anatomischen Daten mindestens Positionsdaten bezüglich Rippen innerhalb der medizinischen Bildern enthalten, und wobei die Kandidatenzone und die Vergleichszone in horizontaler Richtung nicht getrennt sind.

5. Vorrichtung nach Anspruch 4, bei der:
die Vergleichsmedizinbilder Bilder derselben Subjekte wie jenen in den medizinischen Bildern sind, und mindestens eines folgender Bilder umfassend: zeitlich serielle Bilder, die in der Vergangenheit gewonnen wurden, Subtraktionsbilder, die die Differenz zwischen zwei Bildern repräsentieren; und Energiesubtraktionsbilder, die entweder Weichgewebe oder Knochengewebe in hervorgehobener Weise darstellen.

6. Vorrichtung nach Anspruch 4 oder 5, bei der:
die Vergleichszonenbild-Einstelleinrichtung (40) eine Mehrzahl verschiedener Vergleichszonenbilder für eine einzelne Kandidatenzone einstellt.

7. Programm, was einen Computer veranlasst, das Nachweisverfahren für abnormale Muster nach Anspruch 1 auszuführen.

8. Computerlesbares Medium mit dem darin aufgezeichneten Programm nach Anspruch 7.

## Revendications

1. Procédé destiné à détecter des figures anormales, comprenant les étapes pour :
extraire (S2) des régions candidates (Qr) qui incluent des figures candidates anormales (g) à partir d'images médicales (P1), représentées par des jeux de données d'image médicale d'un sujet, lesquels ont été entrés ;
régler (S5) des images de région comparative (Q'), lesquelles sont comparées aux régions candidates ;
calculer (S6) des quantités caractéristiques (T) qui représentent des corrélations parmi les images de région comparative et les images à l'intérieur des régions candidates, et
juger (S7) si oui ou non les candidats inclus dans les régions candidates sont des figures anormales, sur la base au moins des quantités caractéristiques calculées,
dans lequel :
les images de région comparative (Q') sont réglées de telle sorte que l'on recherche des images, lesquelles sont similaires aux images à l'intérieur des régions candidates des images médicales ;
les images similaires étant réglées comme étant les images de région comparative,
obtenir (S3) des données anatomiques (V1) concernant des sujets à l'intérieur desdites images médicales, sur la base desdits jeux de données d'image médicale, les données anatomiques (V1) représentant des données de position d'une structure anatomique à l'intérieur d'un sujet ;
obtenir des données de position anatomique qui représentent des données de position des régions candidates par rapport à la structure anatomique, sur la base des données anatomiques concernant les sujets, et
rechercher les images de région comparative dans les voisinages de positions présentant des relations de position et des caractéristiques anatomiques similaires à celles des régions candidates, qui font référence à des positions sur lesquelles on s'attend à avoir des structures tissulaires similaires à celles des régions candidates, en raison de la symétrie anatomique, sur la base des données anatomiques et des données de position anatomique des sujets,
dans lequel
les sujets sont des thorax humains,
**caractérisé en ce que** :
les données anatomiques incluent au moins des données de position concernant des côtes à l'intérieur des images médicales, et dans lequel la région candidate et la région comparative ne sont pas séparées dans la direction horizontale.

2. Procédé destiné à détecter des figures anormales selon la revendication 1, comprenant en outre les étapes pour :
obtenir des jeux de données d'image médicale comparative, lesquels sont différents des jeux de données d'image médicale mais représentent des images du même type de sujet, et dans lequel :
les images de région comparative (Q') sont réglées de telle sorte que l'on recherche des images, lesquelles sont similaires aux images à l'intérieur des régions candidates des images médicales, parmi les jeux de données d'image médicale comparative.

3. Procédé destiné à détecter des figures anormales selon la revendication 2, dans lequel les images médicales comparatives sont des images du même sujet que celles dans les images médicales.

4. Procédé destiné à détecter des figures anormales, comprenant :
des moyens (10) d'extraction de régions candidates, destinés à extraire des régions candidates (Qr) qui incluent des figures anormales candidates à partir d' images médicales, représentées par des jeux de données d'image médicale (P1) d'un sujet, lesquels ont été entrés ;
des moyens (40) de réglage de région médicale comparative, destinés à régler des images de région comparative (Q'), lesquelles sont comparées aux régions candidates (Qr) ;
des moyens (50) de calcul de quantité caractéristique, destinés à calculer des quantités caractéristiques (T) qui représentent des corrélations entre les images de région comparative et les images à l'intérieur des régions candidates, et
des moyens (60) de jugement, destinés à juger si oui ou non les candidats inclus dans les régions candidates sont des figures anormales, sur la base au moins des quantités caractéristiques calculées (T), dans lequel :
les moyens (50) de réglage d'images de région comparative règlent les images de région comparative (Q') de telle sorte que l'on recherche des images, lesquelles sont similaires aux images à l'intérieur des régions candidates des images médicales ;
et règlent les images similaires comme étant les images de région comparative (Q'),
des moyens (20) d'obtention de données anatomiques, destinés à obtenir des données anatomiques (V1) concernant des sujets à l'intérieur des images médicales, sur la base desdits jeux de données d'image médicale, les données anatomiques (V1) représentant des données de position d'une structure anatomique à l'intérieur d'un sujet ; et
des moyens (30) d'obtention de données de position anatomique, destinés à obtenir des données de position anatomique qui représentent des données de position des régions candidates par rapport à la structure anatomique, sur la base des données anatomiques concernant les sujets, et dans lequel :
les moyens (50) de réglage d'image de région comparative recherchent les images de région comparative dans les voisinages de positions présentant des relations de position et des caractéristiques anatomiques similaires à celles des régions candidates (Qr), qui font référence à des positions sur lesquelles on s'attend à avoir des structures tissulaires similaires à celles des régions candidates, en raison de la symétrie anatomique, sur la base des données anatomiques et des données de position anatomique des sujets,
dans lequel
les sujets sont des thorax humains,
**caractérisé en ce que** :
les données anatomiques incluent au moins des données de position concernant des côtes à l'intérieur des images médicales, et dans lequel la région candidate et la région comparative ne sont pas séparées dans la direction horizontale.

5. Procédé destiné à détecter des figures anormales selon la revendication 4, dans lequel :
les images médicales comparatives sont des images des mêmes sujets que ceux dans les images médicales, et sont au moins une image parmi les suivantes : images série temporelles, lesquelles ont été obtenues dans le passé, des images de soustraction qui représentent la différence entre deux images, et des images de soustraction d'énergie, dans lesquelles des tissus mous ou des tissus osseux ont été mis en valeur.

6. Procédé destiné à détecter des figures anormales selon la revendication 4 ou 5, dans lequel :
les moyens (40) de réglage d'image de région comparative règlent une pluralité d'images de région comparative pour une région candidate unique.

7. Programme amenant un ordinateur à exécuter le procédé destiné à détecter des figures anormales selon la revendication 1.

8. Support pouvant être lu par ordinateur comprenant à l'intérieur le programme suivant la revendication 7.
